# EUROPEAN PATENT APPLICATION

(11) **EP 2 357 687 A1**
(43) Date of publication of application: **17.08.2011**
(21) Application number: 10382037.9
(22) Date of filing: 17.02.2010
(51) Int. Cl.: H01M 2/06, H01M 2/30

(54) **Sealed battery terminal**

(71) Applicant: Garcia Alberola E Hijos, S.L., 03680 Aspe (Alicante) (ES)
(72) Inventor: Garcia alberola, José María, 03680, ASPE (ES)
(74) Representative: Capitan Garcia, Maria Nuria

(57) **Abstract**

This purpose of this invention is a sealed terminal for batteries with a part to which a consumption body is connected and with another part which is inserted in the battery casing and which is antagonistic to a plastic in the interior of the battery in order to ensure adequate sealing, in which the part inserted in the battery casing prevents acid from leaking out of the battery, obtaining an easy and rapid unmoulding of the terminal when it comes out of the mould, as well as preventing distortions of the same, both in the manufacturing process and in the plastic injection process.

## Description

### OBJECT OF THE INVENTION

The purpose of this invention is a sealed battery terminal with a part to which a consumption body is connected and with another part which is inserted in the battery casing and which is antagonistic to a plastic in the interior of the battery in order to ensure that it is adequately sealed.

Due to its special configuration, the part inserted in the battery casing prevents acid from leaking outside the battery.

Furthermore, its special configuration permits an easy and rapid unmoulding of the terminal when it comes out of the mould, as well as preventing distortions therein, both in its manufacturing and in the plastic injection process.

### BACKGROUND TO THE INVENTION

Sealed terminals for batteries are well known in the state of the art which are made from metal and covered in the interior of the battery with a plastic coating.

Said terminals are provided with an external part to which a consumption body is connected and a part which is inserted in the battery casing and which is antagonistic to a plastic inside the battery which permits it to be adequately sealed.

One such device is described in Spanish patent ES2275436 relating to sealed terminals for batteries having a part external to the truncated cone shaped battery and an interior part equipped with a ring labyrinth which prevents acid from leaking out of the battery, as well as preventing water and other liquids from seeping into the interior thereof.

In addition Spanish patent with publication number ES2097388T3 is known concerning a connection terminal for an accumulator which is configured by at least one surrounding groove with profile having a relief in the form of a hook.

The aforementioned terminals are provided with a series of grooves or rings which form a labyrinth in the axial direction of the terminal

There is a disadvantage in the aforementioned terminals associated with the fact that they rotate with respect to the battery when inserted and therefore external connection is hindered, as, since the terminal rotates there is a possibility of rolling or winding of the external connections and a lack of sealing associated with said rotation, as since rotation is permitted, the adjustment between the labyrinth cage and the plastic in the battery interior is affected.

Furthermore, in the previous terminals it is necessary to make the part inserted in the battery casing with a broad thickness in order to avoid its distortion, both in the manufacturing process and in the plastic injection procedure.

All these disadvantages are overcome with this invention which is described in detail below.

### DESCRIPTION OF THE INVENTION

This invention refers to a sealed terminal for a battery with a part which connects to a consumption body and another part which is inserted in the battery casing and which is antagonistic to a plastic in the interior of the battery in order to ensure adequate sealing.

Between the part which connects to a consumption body and the lower part which is inserted in the battery casing there is a relief which defines the horizontal plane of insertion of the terminal within the battery.

The terminal is provided in its lower part with radial vertical projections arranged between a ring labyrinth devised to prevent acid leaking from the battery.

These radial projections prevent the terminal from rotating with respect to the battery when it is inserted therein, permitting in addition the conformation of the part inserted in the battery casing so that it has a reduced thickness, thus avoiding distortions of the same both in the manufacturing process and in the plastic injection process

Furthermore, these projections define a series of cells in the lower part of the terminal which improve the connection of the battery plastic with said terminal as there is an increased contact surface, which ensures improved sealing.

These projections are arranged both in a perpendicular direction and parallel to the unmoulding direction, as well as in directions which are oblique to this direction which permits their location all along the contours of the terminal, a fact which gives rise to the advantages mentioned previously, associated with prevention of rotation of the terminal with respect to the battery when it is inserted therein and the improved sealing and material savings preventing any distortions.

### DESCRIPTION OF THE DRAWINGS

The present descriptive report is complemented by a set of plans illustrating a preferred embodiment of the invention, but which is in no way restrictive.

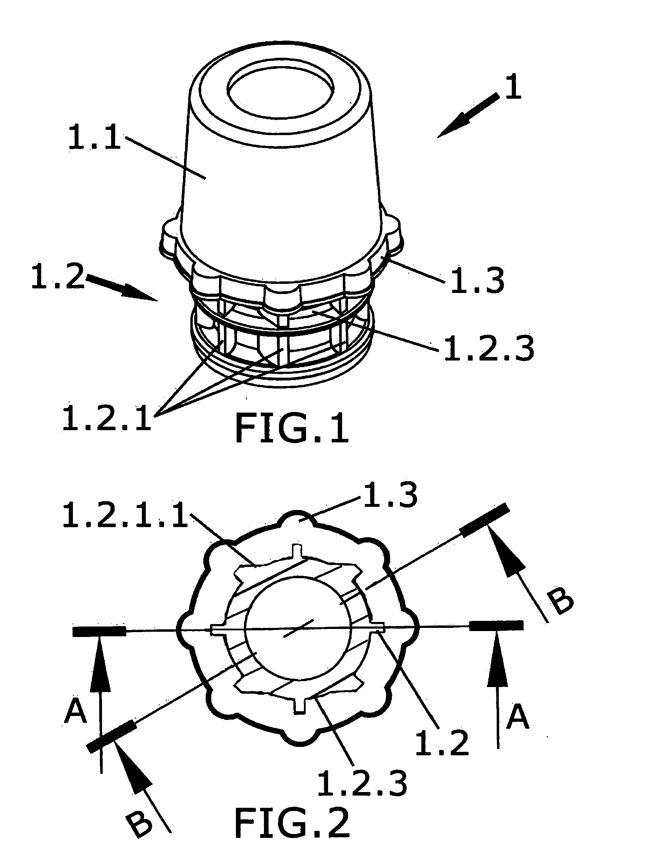

Figure 1 shows a perspective view of the sealed terminal for batteries in this invention.
Figure 2 shows a cross section view CC shown in figure $ of the sealed terminal in this invention.

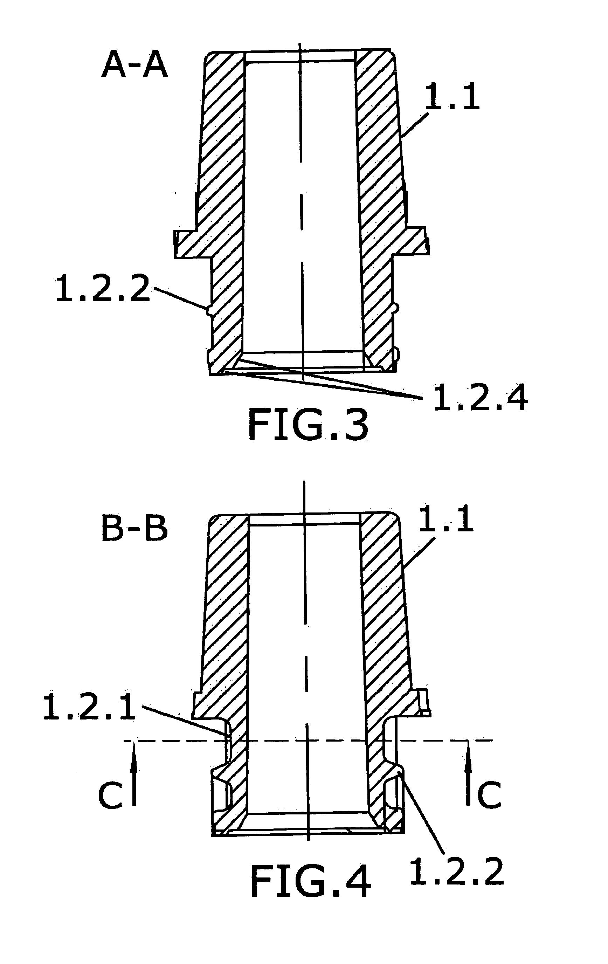

Figure 3 shows a cross section view AA shown in Figure 2.
Figure 4 shows a cross section view BB shown in Figure 2.

### PREFERRED EMBODIMENT OF THE INVENTION

In the light of the foregoing, this invention refers to a sealed terminal (1) for a battery with an upper part (1.1) to which a consumption body is connected and with another lower part (1.2) which is inserted in the battery casing between which there is a relief (1.3) which defines the horizontal plane of insertion of the terminal (1) within the battery.

The terminal is provided in its lower part (1.2) with radial vertical projections (1.2), arranged between a ring labyrinth (1.2.2) designed to prevent acid leaking out of the battery, defining a series of cells (1.2.3) in the lower part (1.2) of the terminal (1) which improve the connection of the battery plastic with said terminal as there is a greater contact surface.

These radial vertical projections (1.2.1) which in this example of a preferred embodiment are 8 in number, are arranged equidistant in the contours of the lower part (1.2) of the terminal (1) with 4 of these, namely those arranged in oblique directions to the unmoulding direction having an oblique thickening (1.2.1.1) the direction of which coincides with the unmoulding direction of the terminal (1) which facilitates unmoulding once it has been formed.

The lower end of the lower part (1.2) of the battery terminal (1) is provided with a double truncated cone shaped configuration (1.2.4) which improves the terminal connection (1) with the battery.

The terminal (1) is made form zinc which reduces the amount of material needed for its conformation.

The essential nature of this invention is not altered by any variations in materials, form, size and arrangement of its component elements, which are described in a non-restrictive manner, with this being sufficient to proceed to its reproduction by an expert.

## Claims

1. Sealed terminal for batteries which comprises a part (1.1) to which a consumption body is connected and another lower part (1.2) which is inserted in the battery casing and which is antagonistic to a plastic in the interior of the battery, both parts (1.1, 1.2) being separated by a relief (1.2) **characterised in that** the lower part (1.2) is provided with radial vertical projections (1.2.1 arranged between a ring labyrinth (1.2.2) preventing rotation of the terminal (1) with respect to the battery when it has been inserted therein, and its distortion during manufacture and during injection of the interior plastic of the battery.

2. Sealed terminal for batteries according to claim 1, **characterised in that** these projections (1.21) are arranged both in perpendicular and parallel directions to the unmoulding , and in oblique directions to this direction, which permits their location along the contours of the terminal (1).

3. Sealed terminal for batteries according to claim 1 **characterised in that** these projections (1.2!) define a series of cells (1.2:3) in the lower part (1.2) fo the terminal (1) which improve the connection of the plastic of the battery with said terminal (1) as there is a greater surface contact.

4. Sealed terminal for batteries according to claim 1 **characterised in that** the radial vertical projections (1.2.1) are arranged in equidistant manner in the contours of the lower part (1.2) of the terminal (1) .

5. Sealed terminal for batteries according to claim 2 **characterised in that** the projections (1.2.1) arranged in oblique direction to the direction of unmoulding are provided with an oblique thickening (1.2.1.1) the direction of which coincides with the direction of unmoulding of the terminal (1).

6. Sealed terminal for batteries according to claim 1 **characterised in that** the lower end of the lower part (1.2) of the battery terminal (1) is provided with a double truncated cone shaped configuration (1.2.4) which improves the terminal connection (1) with the battery.

7. Sealed terminal for batteries according to the previous claims **characterised in that** it is made from zinc.
